# DEMANDE DE BREVET EUROPEEN

(11) **EP 3 340 138 A1**
(43) Date de publication de la demande: **27.06.2018**
(21) Numéro de dépôt: 17209059.9
(22) Date de dépôt: 20.12.2017
(51) Int. Cl.: G06Q 10/08, G05B 19/02, G05B 19/18, G05B 19/4155, G05B 19/418, G06Q 50/04, G06K 19/06

(54) **PROCÉDÉ ET DISPOSITIF DE FABRICATION DE PROFILÉS**

(30) Priorité: 21.12.2016 FR 1663060
(71) Demandeur: Profils Systèmes, 34670 Baillargues (FR)
(72) Inventeur: DERRE, Christophe, 30670 AIGUES VIVES (FR); REINERT, Aymeric, 30670 AIGUES VIVES (FR)
(74) Mandataire: Godard, Xavier

(57) **Abrégé**

L'invention concerne un procédé de fabrication de profilés (P), remarquable en ce qu'il comprend les opérations suivantes :
- création d'une banque numérique de profilés (P) associant chaque profilé (P) à un identifiant,
- soumission d'un profilé (P) à un moyen de capture,
- reconnaissance du profilé par comparaison du profilé (P) capté par le moyen de capture avec les profilés numériques stockés dans la banque numérique de profilés,
- attribution d'un identifiant audit profilé (P),
- impression d'une étiquette dite de traçabilité portant ledit identifiant,
- collage de l'étiquette de traçabilité sur chaque profilé (P),
- mise en oeuvre d'une opération tenant compte de l'identifiant.

L'invention concerne également un dispositif permettant de mettre en oeuvre le procédé en exploitant une machine enrubanneuse paramétrable (230) assurant l'emballage desdits profilés (P).

Application : fabrication des profilés.

## Description

### DOMAINE D'APPLICATION DE L'INVENTION

La présente invention a trait au domaine de la fabrication des profilés de menuiseries et notamment aux adaptations permettant d'assurer la reconnaissance des profilés afin de mettre en oeuvre d'autres opérations dans les meilleures conditions.

### DESCRIPTION DE L'ART ANTÉRIEUR

La gamme de fabrication des produits profilés et notamment de profilés aluminium contient une pluralité d'opérations.
Parmi ces opérations, le laquage consiste à déposer une couche d'un revêtement sur le profilé pour en faciliter l'entretien, la protection et la personnalisation. L'opération de laquage obéit à des paramètres différents et dépendants du profilé à laquer et du laquage souhaité.
Actuellement, une fois laqués, les profilés font l'objet des opérations suivantes :
- décrochage des profilés de la ligne de laquage,
- vérification visuelle de leur état de surface par un opérateur,
- reconnaissance visuelle par un opérateur à des fins de création de paquet,
- réunion par l'opérateur des profilés différents susceptibles de former un paquet,
- emballage des profilés seuls ou des paquets par une machine enrubanneuse avec paramétrage spécifique de la machine en fonction du profilé ou du paquet,
- impression d'une étiquette dite logistique correspondant au profilé ou au paquet.
Il apparaît que plusieurs de ces opérations nécessitent la présence d'une pluralité d'opérateurs formés et peuvent être sources d'erreurs.
Ainsi, par exemple, une mauvaise reconnaissance d'un profilé peut avoir pour conséquence, un mauvais choix de programme de laquage, un mauvais emballage ou un mauvais étiquetage final.
On connaît dans l'art antérieur une pluralité de moyens de reconnaissance visuelle mais il est difficile de les appliquer à une fabrication de profilés où les modèles et les opérations à réaliser sur ces derniers sont très nombreux.

### DESCRIPTION DE L'INVENTION

Ce que constatant et sur la base d'un cahier des charges prédéfini, la demanderesse a mené des recherches visant à automatiser une pluralité d'opérations liées à la fabrication de profilés afin d'en augmenter la productivité et la qualité.
La demanderesse s'est notamment attachée à optimiser des opérations liées à :
- une chaîne de laquage c'est-à-dire une chaîne de dépose d'un revêtement sur un profilé,
- un poste d'emballage,
- etc....

Ces recherches ont abouti à la conception et à la réalisation d'un procédé de fabrication de profilés, nouveau et particulièrement avantageux en répondant aux objectifs décrits ci-dessus.

Selon l'invention, le procédé de fabrication de profilés est remarquable en ce qu'il comprend les opérations suivantes :
- création d'une banque numérique de profilés associant chaque profilé à un identifiant,
- soumission d'un profilé à un moyen de capture,
- reconnaissance du profilé par comparaison du profilé capté par le moyen de capture avec les profilés numériques stockés dans la banque numérique de profilés,
- attribution d'un identifiant audit profilé,
- impression d'une étiquette dite de traçabilité portant ledit identifiant,
- collage de l'étiquette de traçabilité sur chaque profilé,
- mise en oeuvre d'une opération tenant compte de l'identifiant.
Cette caractéristique est particulièrement avantageuse en ce qu'elle permet l'automatisation d'une pluralité d'opérations liées à la reconnaissance du profilé, opérations qui mettent alors en oeuvre une opération préalable de lecture de l'étiquette.
Par exemple, l'opération de laquage va pouvoir bénéficier de cette reconnaissance. L'étiquette de traçabilité peut également servir à l'automatisation de l'opération d'emballage.

Selon une autre caractéristique particulièrement avantageuse de l'invention, le procédé comprend les opérations suivantes :
- création d'une table de correspondance entre le type de profilé et les paramètres de programmation d'un dispositif de laquage,
- détermination des paramètres de laquage en fonction de l'identifiant,
- laquage selon les paramètres attribués à l'identifiant.

L'opération de laquage et notamment l'adaptation du module de laquage sont alors automatisées sans risque d'erreur.

Selon une autre caractéristique, le moyen de capture est un moyen vidéo qui assure la mesure du profilé à des fins de reconnaissance de ce dernier.

En addition de la reconnaissance du profilé, le procédé est, selon une autre caractéristique particulièrement avantageuse de l'invention, remarquable en ce qu'il consiste à reconnaître la position angulaire prise par le profilé. Une telle caractéristique a pour avantage de faciliter la reconnaissance et/ou d'identifier la ou les surfaces sur lesquelles le profilé peut être en appui et les surfaces disponibles.
En effet, l'attribution de l'identifiant à chaque profilé peut être réalisée de différentes façons mais la demanderesse a avantageusement imaginé que le profilé identifié puisse porter lui-même son identifiant pour le rendre disponible aux différents moyens de lecture. La connaissance des surfaces disponibles pour porter cet identifiant est alors particulièrement importante. Selon une autre caractéristique particulièrement avantageuse de l'invention, le procédé de l'invention comprend l'opération suivante :
- détermination de la surface plane disponible pour accueillir une étiquette ou une impression.

Ainsi, selon une variante, le procédé comprend l'opération suivante :
- impression de l'identifiant attribué sur ledit profilé. Cette impression est réalisée sur la surface reconnue comme disponible à cet effet pour ledit profilé identifié. Selon un mode de réalisation préféré, l'impression est réalisée en utilisant de l'encre invisible. Cette caractéristique permet de disposer d'un identifiant sans influer sur l'esthétique du profilé. Cette opération d'impression met en oeuvre des dispositifs tenant compte également de la position du profilé.

Lorsque le procédé est du type de celui mettant en oeuvre une tête d'impression ou de pose d'étiquette, il est remarquable en ce qu'il consiste à orienter ladite tête en fonction de la surface d'accueil déterminée.
Il en est de même pour l'opération de lecture de l'identifiant présente dans le procédé de l'invention Lorsque le procédé est du type de celui mettant en oeuvre une tête de lecture d'identifiant, il est remarquable en ce qu'il consiste à orienter ladite tête de lecture en fonction de la surface d'accueil déterminée.

Selon une autre caractéristique particulièrement avantageuse de l'invention, le procédé comprend les opérations suivantes :
- création d'une table de correspondance réunissant les identifiants des profilés devant former un paquet,
- lecture de l'étiquette ou identifiant porté par les profilés,
- réunion des profilés formant des paquets.

Selon une autre caractéristique particulièrement avantageuse de l'invention liée à l'emballage, lorsque les profilés ou paquets de profilés sont emballés par une machine enrubanneuse paramétrable, le procédé est remarquable en ce qu'il comprend les opérations suivantes :
- lecture de l'étiquette ou de l'identifiant porté par le profilé,
- détermination des paramètres de la machine enrubanneuse,
- enrubannage en fonction desdits paramètres.
L'emballage peut être ainsi automatisé sans risque d'endommagement des profilés souples lors de l'emballage puisque que le profilé est reconnu et les paramètres d'emballage adaptés.
La lecture des identifiants supportés par les profilés permet de disposer des données nécessaires à la réalisation des étiquettes qui sont mises à disposition des clients sur les profilés ou sur les paquets de profilés. Ainsi, selon une autre caractéristique particulièrement avantageuse de l'invention, le procédé comprend les opérations suivantes :
- impression d'une étiquette dite de logistique,
- collage de l'étiquette de logistique sur chaque profilé ou paquet de profilés emballés.

Un autre objet de l'invention concerne un dispositif permettant de mettre en oeuvre le procédé du type de celui comprenant une machine enrubanneuse paramétrable. Selon l'invention, le dispositif est remarquable en ce qu'il comprend un module de retenue de l'extrémité d'un profilé à des fins de rigidification de ce dernier lors de l'emballage par enrubannage.
Ces recherches ont abouti à la conception et à la réalisation d'un procédé.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un procédé et d'un dispositif conformes à l'invention.

### BRÈVE DESCRIPTION DES DESSINS

La figure 1 est un dessin schématique d'une vue générale en perspective d'une sortie de chaîne de laquage de profilés ;

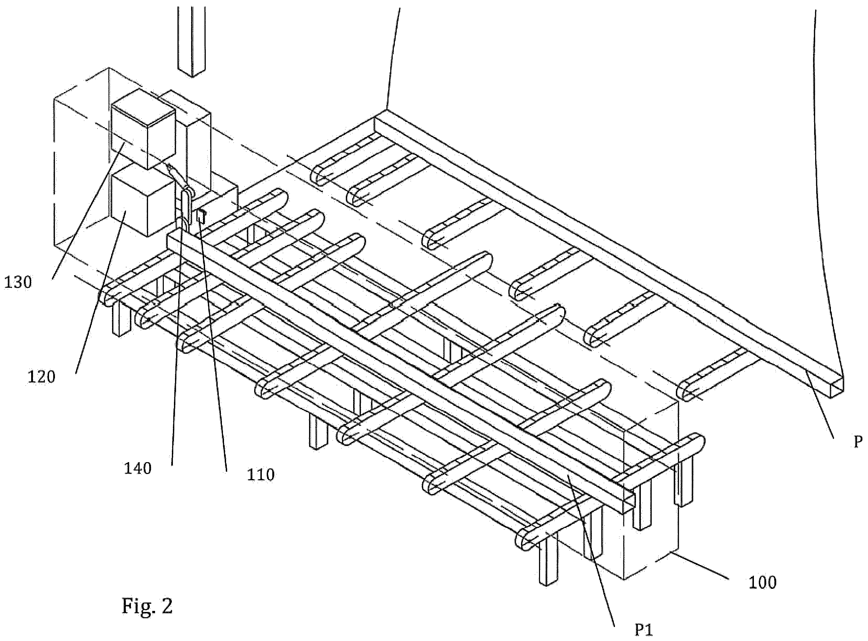

La figure 2 est un dessin schématique d'une vue de détail en perspective d'un poste de reconnaissance et d'impression d'étiquette présent en sortie de chaîne de laquage ;
La figure 3 est un dessin schématique d'une vue en perspective d'un poste de lecture d'étiquette et d'emballage.

### DESCRIPTION DES MODES DE RÉALISATION PRÉFÉRÉS

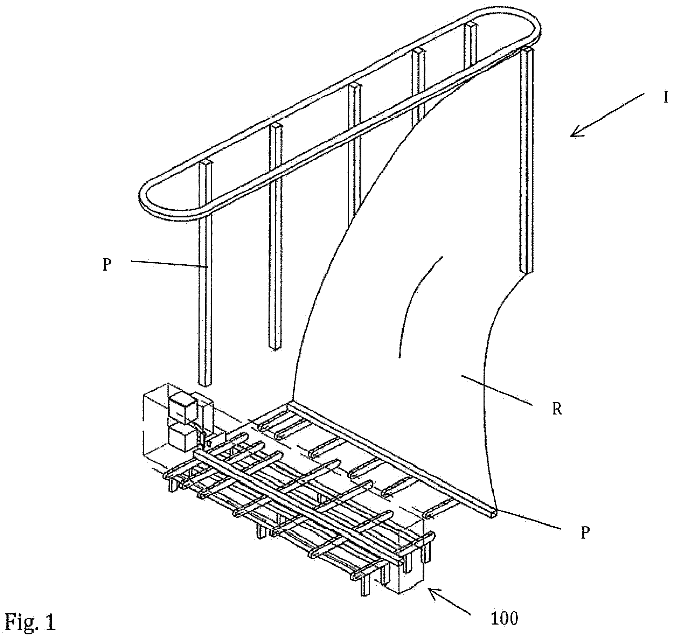

Comme illustré sur le dessin de la figure 1, le procédé de l'invention peut être appliqué en sortie d'une chaîne de laquage de profilés aluminium de menuiseries P. L'installation I illustrée comprend une partie du chemin de sortie emprunté par les profilés P en sortie de four. Les profilés P passent alors progressivement en se déplaçant sur une rampe R d'une position verticale en étant suspendus à des crochets mobiles à une position horizontale où ils sont décrochés.
Après laquage, les profilés doivent être emballés et doivent être donc reconnus préalablement.

Pour automatiser cette opération sans les aléas de l'art antérieur, le profilé P1 est déplacé après décrochage vers un module de reconnaissance et d'impression d'étiquette de traçabilité 100. Ledit module 100 comprend un moyen de vision 110 devant lequel passe le profil de chaque profilé décroché.
Ledit module 100 comprend en outre deux moyens d'impression d'étiquettes 120 et 130. Associé à ces deux moyens d'impression 120 et 130, un bras robotisé 140 vient saisir les étiquettes et les poser sur les profilés.

Conformément à l'invention, le moyen de vision 110 assure la capture numérique de l'image du profilé et la reconnait par comparaison du profilé capté avec une banque numérique de profilés. Cette reconnaissance permet d'attribuer un identifiant audit profilé, identifiant qui va être exploité pour gérer l'opération suivante, à savoir l'emballage ainsi que la réalisation d'une étiquette de colis.
Lors de cette reconnaissance visuelle, le moyen de vision 110 reconnaît également la position prise par le profilé P1. Cette orientation est définie par la connaissance du profilé et des surfaces stables sur lesquelles il peut prendre appui. Cette reconnaissance du profilé associée à la reconnaissance de la position prise par le profilé, permet la détermination de la surface plane disponible pour accueillir une étiquette ou une impression.

Ainsi, lors de la pose de l'étiquette, le bras 140 oriente son extrémité libre tenant l'étiquette en fonction de la surface d'accueil déterminée.

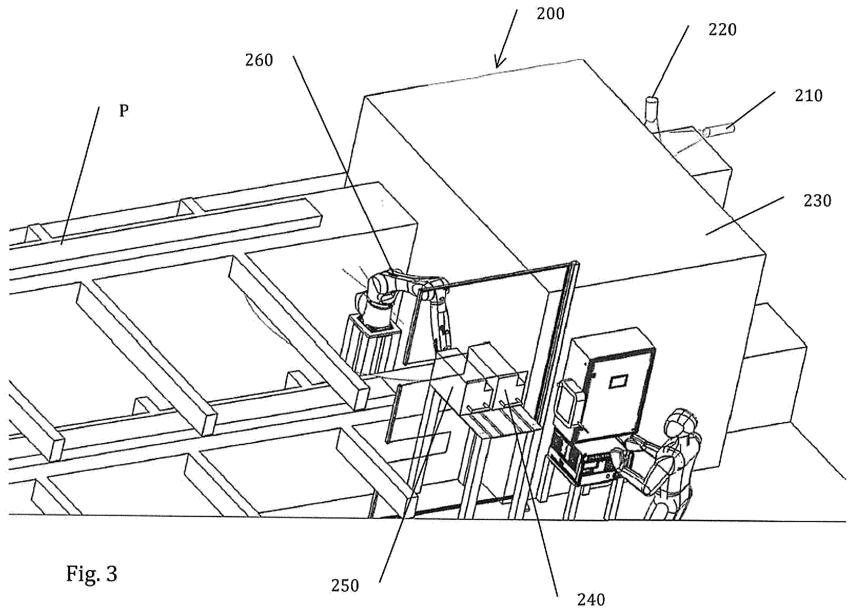

Le profilé P1 portant une étiquette (non illustrée) est déplacé vers le module d'emballage 200 illustré sur le dessin de la figure 3.

Ce module 200 comprend des moyens de lecture 210 de l'étiquette de traçabilité, mais également des moyens de capture 220 (optique, vidéo, etc...) permettant de s'assurer de la forme du paquet de profilés ou du profilé pour obtenir les coordonnées de pose de l'étiquette de colis ou de logistique. Selon que le déplacement du profilé P1 vers le module d'emballage 200 respecte ou non l'orientation déjà capturée, les moyens de vision peuvent être adaptés. Il en est de même selon que les paquets sont formés préalablement ou non.
Ces moyens de captures et les données déterminées permettent aux moyens de lecture 210 d'être orientés en fonction de la position de la surface d'accueil déterminée pour l'étiquette de traçabilité.

Le module 200 comprend au moins une enrubanneuse 230 paramétrable. La lecture de l'étiquette portée par le profilé permet d'identifier ledit profilé (ou le paquet de profilés) et d'adapter les paramètres de la machine enrubanneuse 230 en fonction des caractéristiques dudit profilé. La vitesse linéaire du profilé dans l'enrubanneuse, la tension du film, la vitesse de rotation du rouleau de film autour de profilé sont autant de paramètres qui peuvent êtres adaptés selon les données lues sur l'étiquette en entrée de module d'emballage 200.
Selon un autre exemple, selon une caractéristique non illustrée, l'enrubanneuse 230 comprend un module de retenue de l'extrémité d'un profilé à des fins de rigidification de ce dernier lors de l'emballage par enrubannage. Ce module de retenue venant saisir l'extrémité du profilé ou du paquet à emballer n'est activé que pour certains profilés ou paquets de profilés en fonction des informations disponibles et lues sur les étiquettes qu'ils portent.

Le module 200 est également équipé de deux moyens d'impression d'étiquettes de colis 240 et 250 ainsi que d'un bras de pose de ladite étiquette.

Une fois les paramètres d'emballage déterminés et l'emballage terminé, une étiquette dite de logistique (non illustrée) est imprimée par un des moyens 250 ou 240 et le bras 260 vient saisir l'étiquette et la coller sur chaque profilé ou paquet de profilés emballés.

Une autre situation non illustrée de mise en oeuvre du procédé de l'invention se situe à l'entrée d'une installation de laquage comprenant classiquement un poste de reconnaissance des profilés, un poste de perçage et un poste d'accrochage pour suspension et déplacement en position verticale. Le procédé de l'invention peut également être appliqué au départ de cette opération non seulement pour déclarer les profilés pour un système de suivi de production et de gestion des campagnes de laquage, mais également pour automatiser l'opération et l'adaptation du laquage en fonction des profilés. Ainsi, conformément à l'invention, cette entrée d'une installation de laquage comprend un module de reconnaissance.
Une telle installation comprend également une table de correspondance entre le type de profilé et les paramètres de programmation d'un dispositif de laquage. Ainsi, le module de laquage lui-même assure le laquage selon les paramètres associés à l'identifiant attribué au profilé à laquer.

On comprend que le procédé et le dispositif, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention. Ainsi, par exemple, les moyens de reconnaissance peuvent également être exploités à des fins de vérification de l'état de surface du profilé.

## Revendications

1. Procédé de fabrication de profilés (P), **CARACTÉRISÉ EN CE QU'**il comprend les opérations suivantes :
- création d'une banque numérique de profilés (P) associant chaque profilé (P) à un identifiant,
- soumission d'un profilé (P) à un moyen de capture,
- reconnaissance du profilé (P) par comparaison du profilé capté par le moyen de capture avec les profilés numériques stockés dans la banque numérique de profilés,
- attribution d'un identifiant audit profilé (P),
- impression d'une étiquette dite de traçabilité portant ledit identifiant,
- collage de l'étiquette de traçabilité sur chaque profilé (P),
- mise en oeuvre d'une opération tenant compte de l'identifiant.

2. Procédé selon la revendication 1, **CARACTÉRISÉ EN CE QU'**il comprend les opérations suivantes :
- création d'une table de correspondance entre le type de profilé (P) et les paramètres de programmation d'un dispositif de laquage,
- détermination des paramètres de laquage en fonction de l'identifiant,
- laquage selon les paramètres attribués à l'identifiant.

3. Procédé selon la revendication 1, **CARACTÉRISÉ PAR LE FAIT QU'**il consiste à reconnaître la position angulaire prise par le profilé (P).

4. Procédé selon la revendication 1, **CARACTÉRISÉ EN CE QU'**il comprend l'opération suivante :
- détermination de la surface plane disponible pour accueillir une étiquette ou une impression.

5. Procédé selon la revendication 4 du type de celui mettant en oeuvre une tête d'impression ou de pose d'étiquette, **CARACTÉRISÉ EN CE QU'**il consiste à orienter ladite tête en fonction de la surface d'accueil déterminée.

6. Procédé selon la revendication 4 du type de celui mettant en oeuvre une tête de lecture d'identifiant, **CARACTÉRISÉ EN CE QU'**il consiste à orienter ladite tête de lecture en fonction de la surface d'accueil déterminée.

7. Procédé selon la revendication 1, **CARACTÉRISÉ EN CE QU'**il comprend les opérations suivantes :
- création d'une table de correspondance réunissant les identifiants des profilés devant former un paquet,
- lecture de l'étiquette ou identifiant porté par les profilés (P),
- réunion des profilés formant des paquets.

8. Procédé selon la revendication 1 où les profilés ou paquets de profilés sont emballés par une machine enrubanneuse paramétrable, **CARACTÉRISÉ PAR LE FAIT QU'**il comprend les opérations suivantes :
- lecture de l'étiquette ou de l'identifiant porté par le profilé (P),
- détermination des paramètres de la machine enrubanneuse,
- enrubannage en fonction desdits paramètres.

9. Procédé selon la revendication 7 ou 8, **CARACTÉRISÉ EN CE QU'**il comprend les opérations suivantes :
- impression d'une étiquette dite de logistique,
- collage de l'étiquette de logistique sur chaque profilé ou paquet de profilés (P) emballés.

10. Dispositif permettant de mettre en oeuvre le procédé selon la revendication 7 ou 8, du type de celui comprenant une machine enrubanneuse paramétrable (230), **CARACTÉRISÉ PAR LE FAIT QU'**il comprend un module de retenue de l'extrémité d'un profilé (P) à des fins de rigidification de ce dernier lors de l'emballage par enrubannage.
